## Europäisches Patentamt
## European Patent Office
## Office européen des brevets

(19)

(11) Numéro de publication : **0 020 243**
**B1**

(12)

# FASCICULE DE BREVET EUROPÉEN

(45) Date de publication du fascicule du brevet :
**24.08.83**

(51) Int. Cl.³ : **H 04 N 7/04**

(21) Numéro de dépôt : **80400710.2**

(22) Date de dépôt : **21.05.80**

(54) **Dispositif de sélection de page pour système de télétexte.**

(30) Priorité : **23.05.79 FR 7913239**

(43) Date de publication de la demande :
**10.12.80 Bulletin 80/25**

(45) Mention de la délivrance du brevet :
**24.08.83 Bulletin 83/34**

(84) Etats contractants désignés :
**BE CH DE GB IT LI NL SE**

(56) Documents cités :
**US A 3 889 054**
**US A 3 927 250**
**US A 3 982 064**
**US A 4 016 361**
**US A 4 052 719**

(73) Titulaire : **Etablissement Public Téiédiffusion de France**
**10, rue d'Oradour-sur-Glane**
**F-75015 Paris (FR)**

(72) Inventeur : **Marquet, Jean-François**
**199, Avenue Victor-Hugo**
**F-92140 Clamart (FR)**
Inventeur : **Hernandez, Charles**
**85, Avenue de Paris**
**F-94800 Villejuif (FR)**

(74) Mandataire : **Bloch, Robert et al**
**Cabinet ROBERT BLOCH 39 avenue de Friedland**
**F-75008 Paris (FR)**

## Dispositif de sélection de page pour système de télétexte

La présente invention concerne un dispositif de sélection de page pour système de télétexte compatible avec la diffusion des données de télétexte sur un canal entier de télévision (« plein canal »).

Un système de télétexte, permettant l'affichage de données sur écran d'un récepteur de télévision, est décrit dans la demande de brevet français 2 363 949. Dans ce système, appelé ANTIOPE, une station émettrice diffuse sous forme de paquets des données provenant de plusieurs voies. Les paquets des différentes voies sont multiplexés dans le temps, l'ensemble des paquets d'une voie formant un magazine. Un magazine est découpé en plusieurs pages, les données d'une page commençant par un code particulier appelé drapeau de page, qui est suivi des données indiquant le numéro de la page, et se terminant par un code fin de page.

Après avoir choisi le magazine, l'usager compose sur un clavier le numéro de la page qu'il souhaite visualiser. Après détection du drapeau de page, le numéro de page suivant le drapeau de page est comparé au numéro choisi et si la comparaison est positive, les données de caractère sont transmises à une mémoire et un générateur de caractères produit des caractères sur l'écran du récepteur de télévision à partir des données lues dans la mémoire.

Il faut préciser d'autre part que chaque paquet se compose d'un bloc de données comprenant un nombre variable d'octets, au maximum 32 dans le système ANTIOPE, et d'un préfixe qui précède le bloc de données et sert à caractériser le paquet.

Le préfixe comprend, dans le système ANTIOPE, huit octets : les deux premiers constituent une salve destinée à la synchronisation de la base du temps du récepteur, le troisième est un mot de synchronisation octet, les trois octets suivants (n$^{os}$ 4 à 6) permettent de détecter les paquets transmis sur une voie particulière et constituent ce qu'on appelle le numéro de magazine. Le septième octet sert à numéroter les paquets successifs émis sur la même voie, et permet donc de détecter la perte d'un paquet. Il est appelé pour cette raison indice de continuité. Enfin, le huitième octet, appelé format, définit le nombre d'octets utiles du bloc de données.

Par ailleurs, les données d'une page occupent plusieurs paquets, mais le drapeau de la page peut se situer en n'importe quelle position dans un paquet.

Lorsqu'on envisage la diffusion des données de télétexte sur un canal entier de télévision, on se heurte au problème du temps de traitement nécessaire à la sélection de la page. Un tel mode de diffusion correspond en effet à un débit numérique très élevé, par exemple d'environ 4 Mbits/s, et il est hors de question que le traitement de sélection de page, qui inclut notamment la comparaison entre le numéro de page transmis et le numéro choisi, puisse s'effectuer en un temps compatible avec ce rythme.

De ce fait, si l'on prévoit un tampon dans lequel on inscrit au fur et à mesure les données qui arrivent et d'où l'on extrait les données pour la comparaison, le temps nécessaire pour effectuer cette comparaison sera beaucoup plus long que le temps d'inscription dans le tampon. A l'arrivée des données suivantes, le contenu du tampon n'aura pas pu être transféré, de sorte que ces données ne pourront pas être inscrites et seront détruites.

L'invention vise à remédier à cette difficulté en permettant une décision très rapide quant au transfert des données en vue de la visualisation.

A cet effet, l'invention prévoit un tampon d'entrée d'une capacité d'au moins un paquet, dans lequel les données sont inscrites au fur et à mesure de leur arrivée, un tampon auxiliaire d'une capacité d'au moins un paquet dans lequel les données qui arrivent ne sont inscrites que si un drapeau de page a été détecté, et un tampon principal d'une capacité d'au moins une page dans lequel le contenu du tampon d'entrée est transféré lorsqu'un drapeau de page est détecté, un comparateur commandant la lecture des données inscrites dans le tampon principal si la comparaison est positive, ou la remise à zéro du tampon auxiliaire et du tampon principal si la comparaison est négative.

La lecture du numéro de page étant faite dans le tampon auxiliaire, la comparaison avec le numéro sélectionné peut être effectuée très rapidement et par conséquent la décision d'exploiter ou au contraire d'effacer les données inscrites dans le tampon principal peut être prise très vite. Il en résulte que si une page non intéressante est inscrite dans le tampon principal, elle sera très vite effacée et ainsi ne gênera pas l'inscription de la page suivante.

La présence du tampon d'entrée permet de transmettre au tampon principal des données faisant partie du préfixe, telles que l'indice de continuité et le format, et qui sont par conséquent transmises avant le bloc de données.

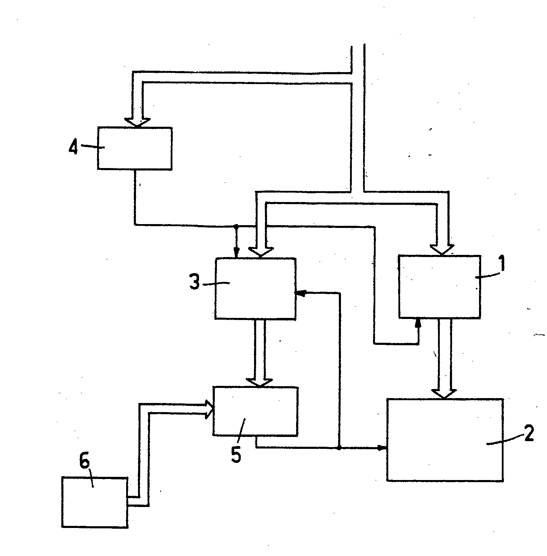

L'invention sera bien comprise à la lecture de la description suivante, faite en référence au dessin annexé, qui représente sous forme de schéma-bloc le dispositif selon l'invention.

Les données, qui arrivent, sont organisées en paquets comprenant chacun un bloc de données comprenant au plus 32 octets précédé d'un préfixe formé de 8 octets. L'ensemble des paquets constitue un magazine découpé en pages, chaque page comprenant plusieurs paquets, chaque page commence par un drapeau de page suivi du numéro de la page et se termine par un code fin de page.

Les trois premiers octets du préfixe servent à la synchronisation bit et octet, comme décrit dans la demande de brevet 2 363 949 précitée. Il est donc inutile de revenir ici sur l'extraction de ces octets.

Les trois octets suivants du préfixe définissent le numéro de magazine et permettent par conséquent à l'usager de choisir la voie numérique intéressante parmi l'ensemble des voies multiplexées dans le temps.

Les deux derniers octets du préfixe, qui définissent l'indice de continuité et le format, comme on l'a vu plus haut, doivent en revanche être transférés avec les blocs de données.

Les données qui arrivent représentent toutes les pages du magazine choisi, mais seules les données représentant la page choisie par l'usager doivent être transférées en vue de la visualisation vers une mémoire d'image non représentée ici.

Le dispositif selon l'invention comprend un tampon d'entrée 1 d'une capacité d'au moins un paquet, en pratique de 64 octets. Le tampon d'entrée 1 est une mémoire FIFO (premier entré, premier sorti) dans laquelle s'inscrit un paquet de données comprenant, comme on l'a dit plus haut, l'indice de continuité, le format et le bloc de données.

Les paquets inscrits dans le tampon d'entrée 1 sont transférés, dans des conditions décrites ci-après, dans un tampon principal 2 constitué par une mémoire FIFO d'une capacité d'au moins une page, en pratique de 2 048 octets.

Les données sont également appliquées à un tampon auxiliaire 3, constitué par une mémoire FIFO de 64 octets, mais l'inscription dans le tampon auxiliaire 3 est commandée par la détection d'un drapeau de page dans le circuit d'identification 4.

Si un paquet contient un drapeau de page, le circuit 4 commande le transfert du paquet inscrit dans le tampon d'entrée 1 vers le tampon principal 2. D'autre part, la détection du drapeau de page autorise l'écriture dans le tampon auxiliaire 3 et, de ce fait, les données qui s'inscrivent dans le tampon auxiliaire 3 sont le drapeau de page, le numéro de page et les données suivantes du paquet. Mais l'indice de continuité, le format et les données précédant éventuellement le drapeau de page ne sont pas inscrites dans le tampon auxiliaire 3.

Les données inscrites dans le tampon auxiliaire 3, donc essentiellement le numéro de page, sont comparées dans un comparateur 5 avec le numéro de page choisi par l'usager au moyen d'un sélecteur 6. Si la comparaison est positive, le comparateur commande le transfert des données inscrites dans le tampon principal 2 en vue de la visualisation.

Si la comparaison est négative, les données inscrites dans le tampon principal ne sont pas intéressantes et le comparateur 5 remet immédiatement à zéro le tampon principal 2 de même que le tampon auxiliaire 3.

Comme les données intéressantes dans le tampon auxiliaire 3, à savoir le drapeau de page et le numéro de page, ont été inscrites en premier, elles sont disponibles en premier et le temps d'accès à ces données, donc aussi le temps de traitement, sont réduits au minimum. Cela permet de remettre à zéro le tampon principal 2 avant l'arrivée du drapeau de page suivant.

Une page comprend au minimum 5 paquets qui correspondent chacun à une ligne de balayage télévision, soit 64 µs.

La transmission d'une page dure donc au minimum $5 \times 64 = 320$ µs.

Le traitement décrit ci-dessus commence avec un drapeau de page, dure au plus 300 µs. La remise au zéro du tampon principal 2 se produira donc avant l'arrivée du drapeau de page suivant, et le tampon principal sera disponible pour recevoir les données de la page suivante.

**Revendication**

Dispositif de sélection de page pour système de télétexte, les données qui arrivent étant organisées en paquets comprenant un bloc de données précédé d'un préfixe, certains des paquets incluant, dans ledit bloc, des codes spécifiques appelés drapeaux de page, une page comprenant les données comprises entre un drapeau de page et un code fin de page, comprenant, à la réception, un tampon, dans lequel les données sont inscrites au fur et à mesure de leur arrivée, une mémoire d'image, à laquelle le tampon transmet la page à visualiser, un circuit (4) de détection de drapeau de page, et un comparateur (5), comparant le numéro de page suivant le drapeau de page inscrit dans le tampon et le numéro choisi et commandant, si la comparaison est positive, la lecture des données inscrites dans le tampon pour leur transfert vers la mémoire d'image, caractérisé par le fait que le tampon comprend un tampon d'entrée (1), d'une capacité d'au moins un paquet, dans lequel les données sont inscrites au fur et à mesure de leur arrivée, un tampon auxiliaire (3) d'une capacité d'au moins un paquet, dans lequel les données qui arrivent ne sont inscrites que si un drapeau de page a été détecté, et un tampon principal (2), d'une capacité d'au moins une page, dans lequel le contenu du tampon d'entrée (1) est transféré lorsqu'un drapeau de page est détecté, le comparateur (5) commandant la lecture des données inscrites dans le tampon principal (2) si la comparaison est positive, ou la remise à zéro du tampon auxiliaire (3) et du tampon principal (2) si la comparaison est négative.

**Claim**

A page selection device for a videotex system in which the incoming data are arranged in blocks comprising a data group following a prefix, some of the blocks having within said group specific codes called page headers, a page comprising the data between a page header and an end of page code comprising, at the reception side, a buffer, in which the data are entered as they arrive, an image memory, to which the buffer transmitts the page to be displayed, a page header detecting circuit (4), and a comparator (5), comparing the page number following the page header entered in the buffer and the choosen number and controlling, if the comparison is positive, the reading of the data entered in the buffer for transfer to the page memory, characterised in that the device comprises an input buffer (1), having a capacity of at least one block, in which data are entered as they arrive, an additional buffer (3) with a capacity of at least one block, in which the incoming data are only entered if a page header has been detected, and a main buffer (2) with a capacity of at least one page, in which the content of the input buffer (1) is transferred when a page header is detected, the comparator controlling the reading of the data entered in the main buffer (2) if the comparison is positive or resetting to zero the additional buffer (3) and the main buffer (2) if the comparison is negative.

**Anspruch**

Vorrichtung für die Seitenauswahl bei einem Teletextsystem, bei dem die ankommenden Daten zu Paketen zusammengefaßt werden, die einen Datenblock, dem eine Kennzahl vorausgeht, enthalten, wobei bestimmte Pakte in dem Datenblock spezielle, als Seitenmarkierung benannte Codewörter einschließen, während eine Seite die zwischen einer Seitenmarkierung und einem Seitenendecode vorhandenen Daten umfaßt, mit einem am Empfang befindlichen Puffer, in den die Daten entsprechend ihrer Ankunft eingegeben werden, einem Bildspeicher, an den der Puffer die sichtbar zu machende Seite überträgt, einem Schaltkreis (4) zum Feststellen der Seitenmarkierung, und mit einem Vergleicher (5), der die Seitennummer, welche der in den Puffer eingegebenen Seitenmarkierung folgt, mit der ausgewählten Nummer vergleicht und bei positivem Vergleich das Ablesen der in den Puffer eingegebenen Daten steuert, um sie an den Bildspeicher zu übertragen, dadurch gekennzeichnet, daß der Puffer einen eine Kapazität von mindestens einem Paket aufweisenden Eingabepuffer (1), in den die Daten entsprechend ihrer Ankunft eingegeben werden, einen eine Kapazität von mindestens einem Paket aufweisenden Hilfspuffer (3), in den die ankommenden Daten nur eingegeben werden, wenn eine Seitenmarkierung festgestellt worden ist, und einen eine Kapazität von mindestens einer Seite aufweisenden Hauptpuffer (2) umfaßt, in den der Inhalt des Eingabepuffers (1) übertragen wird, wenn eine Seitenmarkierung festgestellt wird, und daß der Vergleicher (5) bei positivem Vergleich das Ablesen der in den Hauptpuffer (2) eingegebenen Daten oder bei negativem Vergleich das Zurückstellen des Hilfspuffers (3) und des Hauptpuffers (2) auf Null steuert.